**Europäisches Patentamt**

**European Patent Office**

**Office européen des brevets**

(19)

(11) Veröffentlichungsnummer: **0 255 724**
**B1**

# (12) EUROPÄISCHE PATENTSCHRIFT

(45) Veröffentlichungstag der Patentschrift:
05.12.90

(21) Anmeldenummer: **87111296.7**

(22) Anmeldetag: **05.08.87**

(51) Int. Cl.⁵: **B21F 11/00, B21B 15/00**

(54) **Verfahren und Vorrichtung zum Unterteilen von Drahtwindungen.**

(30) Priorität: **05.08.86  DE 3626440**

(43) Veröffentlichungstag der Anmeldung:
**10.02.88 Patentblatt 88/6**

(45) Bekanntmachung des Hinweises auf die Patenterteilung:
**05.12.90 Patentblatt 90/49**

(84) Benannte Vertragsstaaten:
**AT BE DE ES FR GB GR IT LU NL SE**

(56) Entgegenhaltungen:
**DE-A- 2 108 907**
**DE-B- 2 102 684**
**GB-A- 1 246 049**

(73) Patentinhaber: **Schwerdtfeger + Kubicek**
**Systemtechnik GmbH & Co. KG, Zum Fürstenmoor 11,**
**D-2000 Hamburg 90(DE)**
Patentinhaber: **Hamburger Stahlwerke GmbH,**
**Dradenaustrasse 33, D-2103 Hamburg 95(DE)**

(72) Erfinder: **Schwerdtfeger, Joachim, Dr.-Ing.,**
**Schlüterstrasse 58, D-2000 Hamburg 13(DE)**
Erfinder: **Kubicek, Andreas, Dipl.-Ing., Barmbeker**
**Strasse 131, D-2000 Hamburg 60(DE)**
Erfinder: **Sensis, Siegfried, Hagenau 67,**
**D-2000 Hamburg 76(DE)**
Erfinder: **Wager, Manfred, Wetternstrasse 15,**
**D-2162 Steinkirchen(DE)**

(74) Vertreter: **Hansmann, Dierk, Dipl.-Ing., Jessenstrasse 4,**
**D-2000 Hamburg 50(DE)**

**Beschreibung**

Die Erfindung bezieht sich auf ein Verfahren zum Unterteilen von einer Lage hintereinander und sich überlappend auf einem Fördermittel aufliegenden Drahtwindungen, die von einem Windungsleger aus walzwarmen Draht geformt und auf das Fördermittel abgelegt worden sind, auf dem die Drahtwindungen zu einer Sammelvorrichtung gefördert werden, wobei oberhalb des Fördermittels eine verfahrbare Anordnung mit einem Aufnehmer für eine oder mehrere Drahtwindungen und eine Schneideeinrichtung angeordnet ist, die mit einem Sensor eine Drahtwindung ermittelt und eine vorbestimmte Windung separiert sowie eine Trennung vornimmt.

Üblicherweise werden von den in Stahlwerken von einem Windungsleger geformten Drahtwindungen auf dem jeweiligen Fördermittel manuell Drahtstücke als Schrott abgetrennt, die aufgrund unzureichender Abkühlung durch einen Produktionsanlauf unbrauchbar sind. Diese Tätigkeit ist außerordentlich beschwerlich und für die diese Kappvorgänge durchführenden Personen mit Gefahren verbunden. Es ist aber zur Mechanisierung dieses Vorganges eine Vorrichtung bekannt geworden, bei der auf einem Rahmen oberhalb der Förderbahn ein verfahrbarer Wagen vorgesehen ist, auf dem ein weiterer Wagen mit einer Drahtwindungsaufnahmeeinrichtung und einer Schneideeinrichtung verfahrbar ist. Bei dieser bekannten Anordnung ist ein relativ großer Bauaufwand erforderlich, der einen Einsatz der Vorrichtung nur in großen Fertigungsräumen für Drahtwindungen gestattet. Da der Hubzylinder der Drahtwindungsaufnahmeeinrichtung nach oben ausfährt, muß die Hallendecke ausreichend hoch sein. Die verwendeten Lasersensoren zur Einstellung sind kostenaufwendig, ohne daß eine besondere sind kostenaufwendig, ohne daß eine besondere Präzisierung des Arbeitsverfahrens mit deren erzielt werden kann, da sich der auf dem Rahmen verfahrbare Wagen nur relativ ungenau mit dem Draht auf dem Förderband synchronisieren läßt.

Eine gattungsgemäße Vorrichtung ist nach der DE-B 2 102 684 bekannt geworden. Hierbei besteht der Mangel, daß die Lage und Form der Windungen durch den Schnitt und die Separation verändert wird. Es ist erforderlich, die Windungen auseinanderzuziehen, so daß für einen Kopf- und Fußschnitt relativ viel Platz vorhanden sein muß. Hierdurch tritt bei langsam laufenden Transportbändern eine Stoßzeit auf, die eine Produktionsänderung nach sich zieht.

Die Aufgabe der Erfindung besteht darin, ein selbsttätiges automatisches Verfahren sowie eine Vorrichtung zum Unterteilen von einer Lage hintereinander und sich überlappend auf einem Fördermittel aufliegender Drahtwindungen zu schaffen, das bei einfachem Gerätebau mit geringer Bauhöhe eine gute Synchronisation zwischen dem Gerät und dem Drahtringvorschub ermöglicht wird und die einzelnen Drahtwindungspaare selektiert und geschnitten werden können, wobei Ausfallzeiten durch Gerätestörungen minimiert und die Entnahme von Drahtproben sowie die Entfernung von Schnittresten gewährleistet wird.

Erfindungsgemäß erfolgt die Lösung der Aufgabe bezüglich des Verfahrens durch die kennzeichnenden Merkmale des Anspruches 1.

Weitere kennzeichnende Verfahrensschritte sind durch die Merkmale in den Ansprüchen 2 und 3 gegeben.

Vorrichtungen zur Lösung der Aufgabe sind jeweils durch die Merkmale der Ansprüche 4 und 5 gekennzeichnet.

Weitere Ausgestaltungen der Vorrichtungen sind durch die Merkmale der Ansprüche 6 bis 14 gekennzeichnet.

In der Zeichnung sind Ausführungsbeispiele der Erfindung schematisch dargestellt. Es zeigen:

Fig. 1 eine Anlage bestehend aus einer Kranbahn mit verfahrbaren Einheiten und einem absenkbaren Werkzeugkopf zum Drahtschneiden in einer perspektivischen Ansicht,

Fig. 2a bis 2f Ausgestaltungen von auf Kranbahnen verfahrbaren Einheiten,

Fig. 3 eine weitere Ausführungsform einer Anordnung,

Fig. 4 eine Seitenansicht im Ausschnitt gemäß Fig. 3,

Fig. 5 eine Ausführungsform mit einem Portalwagen in Seitenansicht,

Fig. 6 bis 8 einen Werkzeugkopf in perspektivischer Darstellung,

Fig. 9 eine Funktionsplatte des Werkzeugkopfes gemäß Fig. 6 in Seitenansicht,

Fig. 10 eine Darstellung des Hubes des Werkzeugkopfes während eines Bearbeitungszykluses,

Fig. 11 eine Bahnkurve des Werkzeugkopfes,

Fig. 12 eine Anlage in perspektivischer Darstellung mit einem zweibahnigen Walzwerk,

Fig. 13 eine Seitenansicht eines Werkzeugkopfes,

Fig. 14 eine Seitenansicht gemäß Fig. 13 um 90° gedreht.

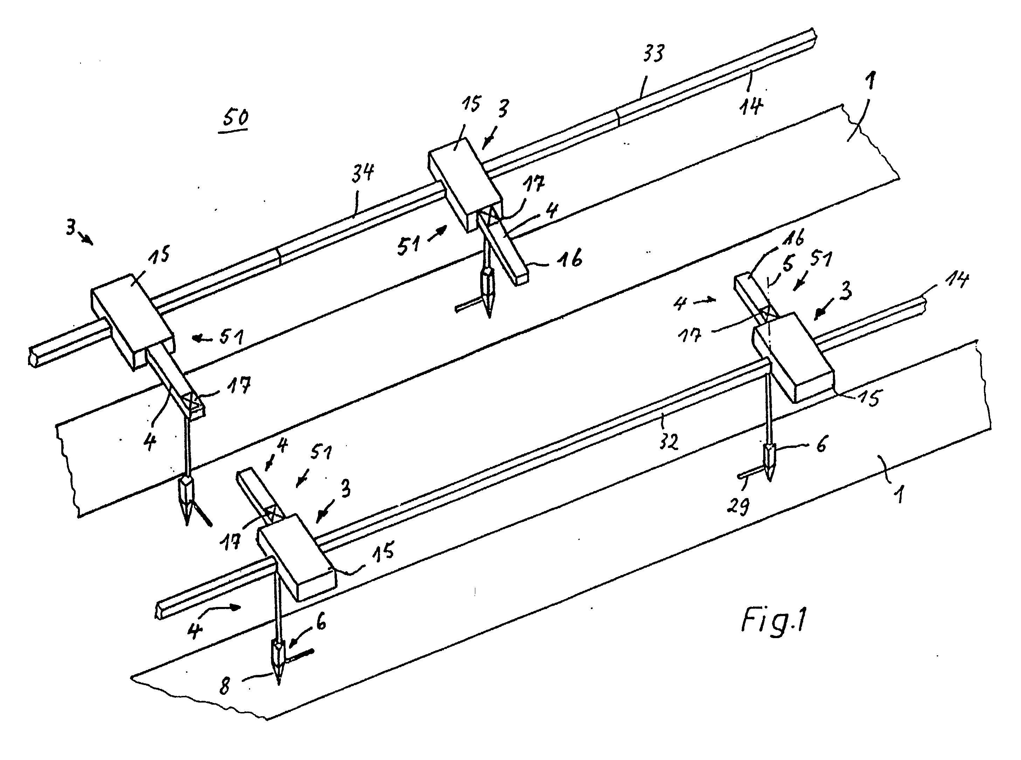

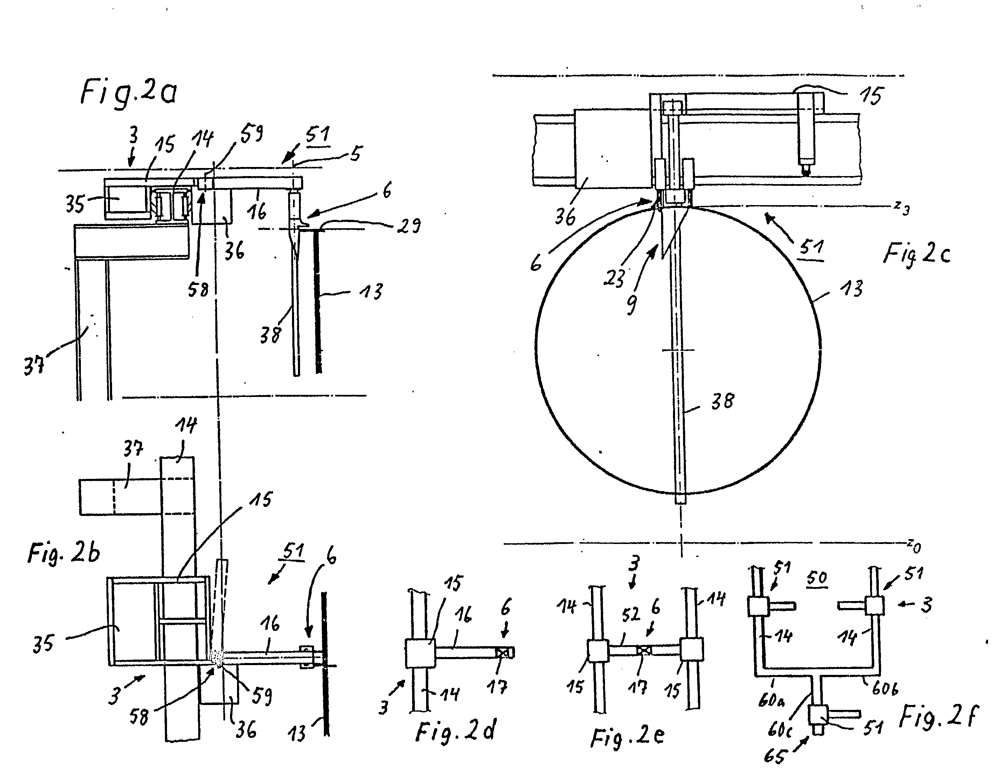

Bei der gemäß Fig. 1 dargestellten Anlage 50 sind zwei Kranbahnen 14 vorgesehen, die oberhalb von zwei Förderbahnen 1 für Drahtwindungen 2 angeordnet sind. Auf den Kranbahnen 14 sind Bahnwagen 15 als verfahrbare Einheiten angeordnet, die jeweils einen Kragarm 16 aufweisen. In den Kragarmen 16 sind Laufwagen 17 gelagert, an denen jeweils eine vertikale Stangenführung 38 angeordnet ist. Jeder Kragarm 16 mit einer Stangenführung 38 bildet einen Ausleger 4 für einen Werkzeugkopf 6. An dem Werkzeugkopf 6 ist jeweils eine Funktionsplatte 8 angeordnet, mittels der die jeweils von der Förderbahn 1 aufzunehmende Drahtwindung 2 separiert werden kann. Abgetrennte Drahtabfälle 13 werden nach dem Schneidvorgang an einem einstellbaren Halter Schrotthaken 29 gehalten. Die vordere Schiene 32 der Kranbahn 14 ist als Rangierstrecke für die Bahnwagen 15 ausgebildet. Wie die hintere Schiene 33 der Kranbahn 14 zeigt, kann auch ein Schienenstück 34 vorgesehen sein, das mit der Kranbahn 14 lösbar verbunden ist. Dieses Schienenstück 34 kann beispielsweise komplett mit einem Bahnwagen 15 mittels eines nicht näher dargestellten Krans ausgewechselt werden, wenn Wartungs- oder Reparaturarbeiten an dem Werkzeugkopf 6 oder weiteren an den Bahnwagen 15 angeordneten Funktionselementen erforderlich sind. Es ist daher möglich, Die Vorrichtungen 51 zum Unterteilen und Separieren von Drahtwindungen 2 zu warten und zu reparieren, ohne daß der Betriebsablauf der Anlage 50 beeinträchtigt wird. Fig. 2a bis 2f zeigen weitere Ausgestaltungen von auf Kranbahnen 14 verfahrbaren Vorrichtungen 51.

In den Fig. 2a bis 2c ist jeweils eine Vorrichtung 51 nach Fig. 1 als schematische Einzelheit dargestellt. Der Bahnwagen 15 umgreift beidseitig die Kranbahn 14, die auf einer Stütze 37 abgestützt ist. Auf der dem Kragarm 16 abgewandten Seite des Bahnwagens 15 ist eine Antriebseinrichtung 35 angeordnet, die gleichzeitig einen Gewichtsausgleich für die an dem Kragarm 16 hängenden Lasten darstellt. Der Fahrmotor 36 für den Bahnwagen 15 befindet sich auf der Seite des Kragarms 16 und ist außerhalb von dessen Schwenkbereich mit dem Rahmen des Bahnwagens 15 verbunden. Der Kragarm 16 kann mittels eines Gelenkes 58 um eine vertikale Achse 59 schwenkbar sein (Fig. 2d). In diesem Fall ist es nicht erforderlich, den Werkzeugkopf 6 in Längsrichtung des Kragarms 16 verfahrbar auszubilden, so daß keine Laufwagen 17 erforderlich sind.

Fig. 2e zeigt eine Vorrichtung 51, bei der der Ausleger 4 als Querträger 52 ausgebildet und endabschnittseitig auf zwei Kranbahnen 14 verfahrbar gelagert ist. Auf den Querträger 52 befindet sich ein über dessen Länge verfahrbarer Laufwagen 17, an dem mittels einer nicht näher dargestellten Stangenführung 38 ein Werkzeugkopf 6 befestigt ist.

Bei den in den Fig. 2a bis 2e dargestellten Ausführungsformen wird entweder die Stangenführung 38 am jeweiligen Ausleger 4 um die vertikale Längsachse drehbar gelagert oder aber der Werkzeugkopf 6 an der nicht drehbaren Stangenführung 38 um eine vertikale Achse 5 drehbar gelagert. Von Vorteil ist es, bei einer Anlage 50 eine Parkbahn 65 vorzusehen, auf der für Zwecke der Wartung, Reparatur oder Reservehaltung Vorrichtungen 51 vorgehalten werden können. Eine mögliche Anordnung einer Parkbahn 65 ist in Fig. 2f dargestellt. Die hier angedeutete Anlage 50 weist zwei parallel zueinander angeordnete Kranbahnen 14 auf, die an ihrem jeweiligen einen Endabschnitt mittels Kranbahnabschnitten 60a, 60b mit einem weiteren Kranbahnabschnitt 60c verbunden sind. Dieser Kranbahnabschnitt 60c dient als Parkbahn 65. Durch die Kranbahnabschnitte 60a, 60b ist es möglich, vor Einfahren einer Vorrichtung 51 in die Parkbahn 65 oder aber beim Herausfahren aus dieser Rangiervorgänge durchzuführen.

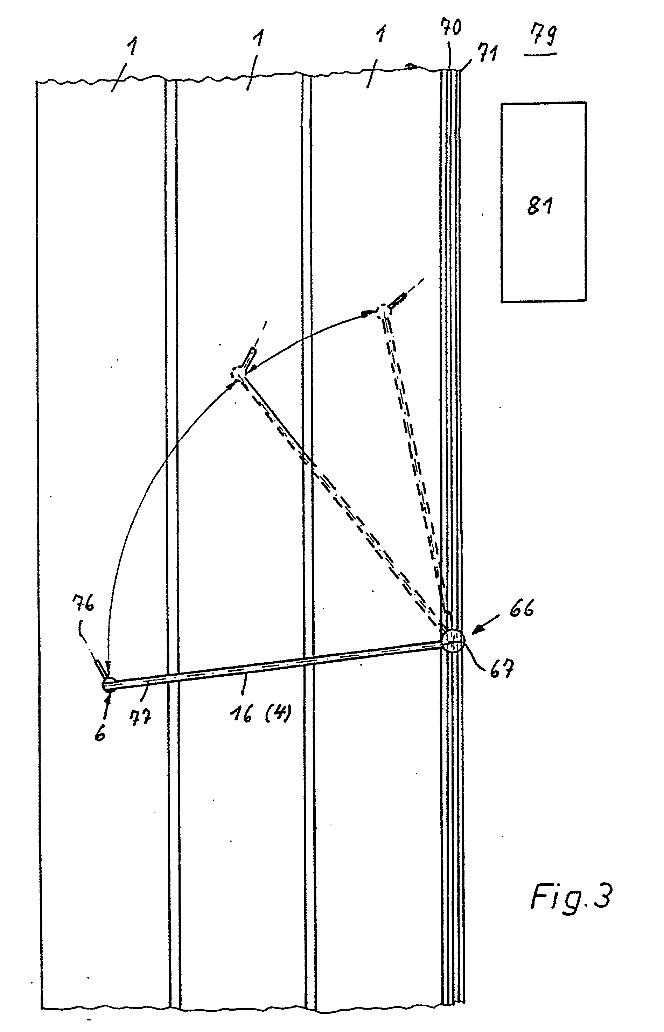

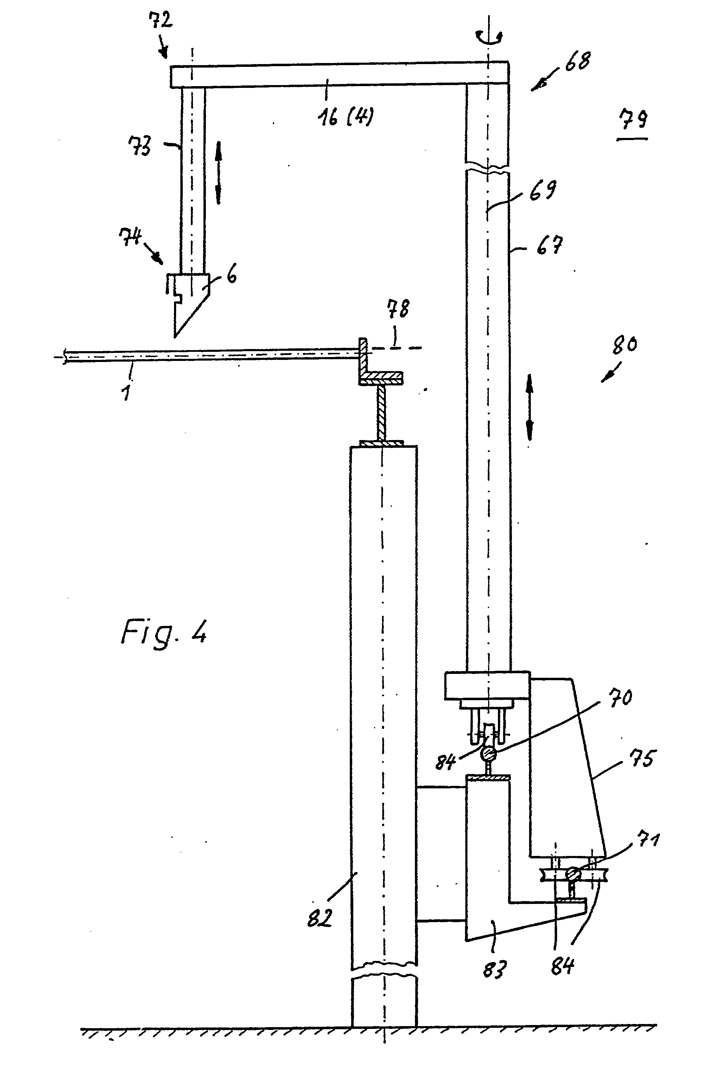

In den Fig. 3 und 4 ist eine weitere Anlage 79 mit einer Vorrichtung 80 zum Drahtschneiden dargestellt. Auf einem Gerüst 82 ist das Fördermittel 1 angeordnet, auf denen die nicht näher dargestellten Drahtwindungen 2 gefördert werden. Im Bereich der Eingriffstrecke ist das Fördermittel geteilt. In Fig. 3 ist eine Dreiteilung dargestellt. Neben dem Gerüst 82 unterhalb der durch die Förderbahnen 1 gebildeten Ebene 78 sind auf einem Stützträger 83 Schienen 70, 71 angeordnet. Auf diesen Schienen 70, 71 ist ein Fahrwagen 66 der Vorrichtung 80 gelagert. Hierzu weist der Fahrwagen 66 einen Fahrzeugrahmen 75 auf, an dem Führungs- und Antriebsräder 84 ausgebildet sind, die mit den Schienen 70, 71 im Eingriff sind. Beim Auswechseln der Fahrzeuge wird der Eingriff der Räder mittels Hebelstellung mit einem Handgriff gelöst. Auf dem Fahrzeugrahmen 75 ist eine vertikale Stütze 67 angeordnet, die als Hubsäule teleskopisch längenveränderbar ausgebildet ist. An dem oberen Endabschnitt 68 der Stütze 67 ist ein als Kragarm 16 ausgebildeter Ausleger 4 angeordnet, an dessen freiem Endabschnitt 72 eine vertikal nach unten gerichtete Hubstange 73 vorgesehen ist. An dem unteren Endabschnitt 74 der Hubstange 73 ist der Werkzeugkopf 6 angeordnet. Die Hubstange ist teleskopisch längenveränderbar ausgebildet.

Der Hubantrieb für die Hubstange 73 und die Stütze 67 kann elektromotorisch und/oder hydraulisch erfolgen. Möglich ist es, für die Stütze 67 einen hydraulischen Stellantrieb und für die Hubstange 73 einen elektromotorischen Stellantrieb vorzusehen. Um den Werkzeugkopf 6 über den Förderbahnen 1 horizontal verschwenken zu können, kann entweder die Stütze 67 mit dem Kragarm 16 um die Längsachse 69 der Stütze 67 oder aber nur der Kragarm 16 um die Längsachse 69 der dann nicht drehbaren Stütze 67 geschwenkt werden. Von Vorteil ist es, den Werkzeugkopf 6 derart an der Hubstange 73 anzuordnen, daß die durch die Arbeitsrichtung des Einzugshakens 28 bzw. Schrotthakens 29 gebildete Einsatzebene 76 des Werkzeugkopfes 6 winklig zur Längsachse 77 des Kragarms 16 ausgerichtet ist. Hierdurch ist es möglich, ohne Drehen des Werkzeugkopfes 6 diesen beim Verschwenken über die Förderbahn 1 jeweils mit den gewünschten Drahtwindungen 2 in Wirkeingriff zu bringen. Durch Querverfahren des Fahrwagens 66 ist es möglich, mittels einer Vorrichtung 80 die Drahtwindungen an zwei Stellen zu schneiden. Die Aufteilung des für den Werkzeugkopf 6 erforderlichen Hubs auf die Stütze 67 und die Hubstange 73 ermöglicht eine feinfühlige und genaue Regelung des Werkzeugkopfes 6.

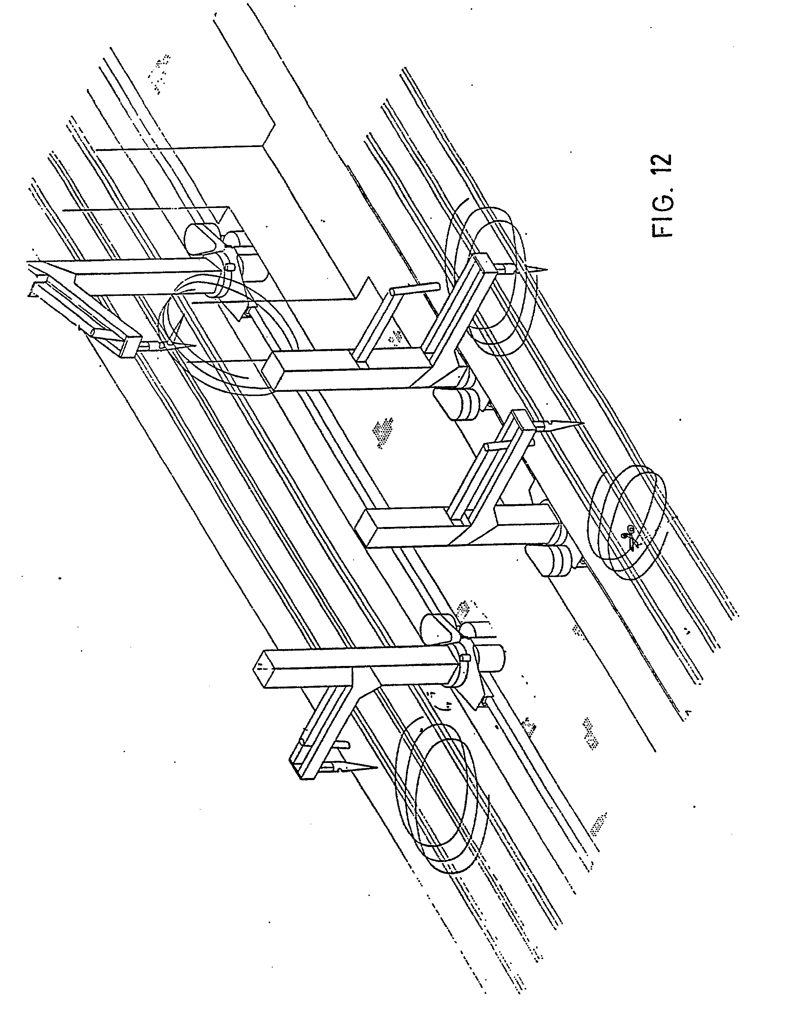

Gemäß Fig. 12 zeigt eine weitere Ausführungsform einer Anlage dargestellt, die sich von der obigen vorstehenden Anordnung dadurch unterscheidet, daß die Säule starr ist. Die Säule ist über eine angetriebene Drehverbindung mit den Fahrzeugunterteil verbunden, und der Werkzeug-Kragarm ist starr angeordnet sowie längs der Säule vertikal verfahrbar. Der Werkzeugkopf wird um eine vertikale Achse geschwenkt und ist ansonsten starr angeordnet, wobei ein zugeordneter Sensor einen eigenen Kragarm besitzt.

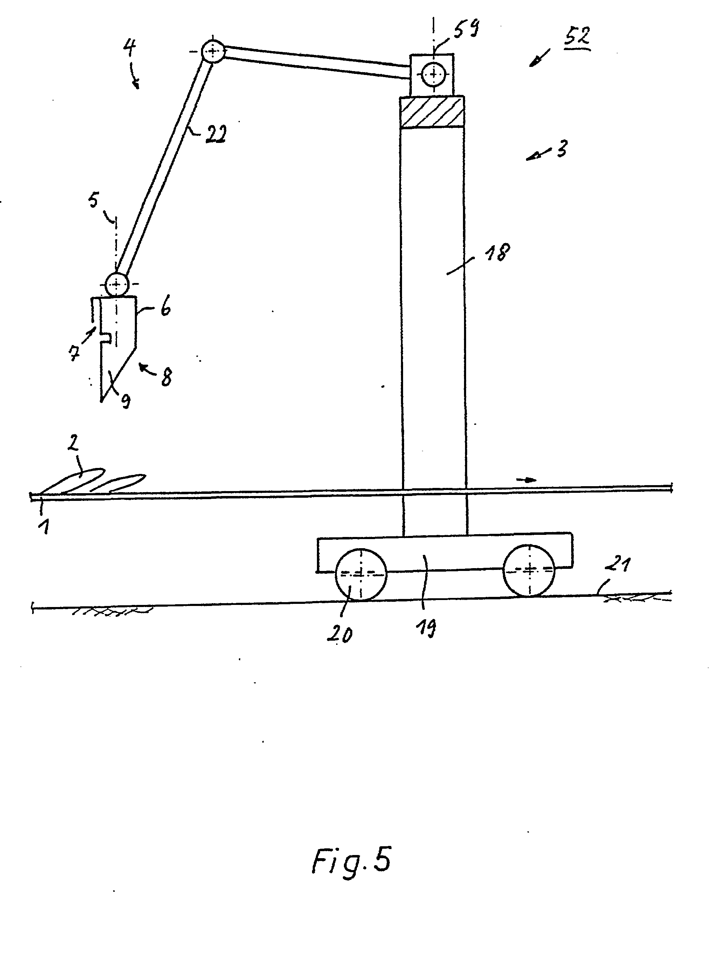

In Fig. 5 ist eine weitere Vorrichtung 52 zum Unterteilen und Separieren von Drahtwindungen 2 dargestellt. Sie besteht aus einem Portalrahmen, der auf einem Fahrwerk 19 mit Rädern 20 abgestützt ist, die in Radführungen 21 geführt sind. Die Radführungen 21 befinden sich beidseitig jeweils einer Förderbahn 1, mittels derer Drahtwindungen 2 gefördert werden. Am oberen Abschnitt des Portalrahmens 18 ist ein als Gabelarm 22 ausgebildeter Ausleger 4 angeordnet. Dieser Gabelarm 22 ist am Portalrahmen 18 um eine vertikale Achse 59 schwenkbar gelagert. An dem freien Endabschnitt des Gabelarms 22 ist ein Werkzeugkopf 6 angeordnet, der oberhalb der Drahtwindungen 2 geführt wird. Der Werkzeugkopf 6 kann wie der der Vorrichtung 51 ausgebildet sein und weist eine Funktionsplatte 8 mit einem Eindringglied 9 auf. An dem Werkzeugkopf 6 ist ferner eine Abtasteinrichtung 7 angeordnet, die als Meßwertaufnehmer zur Identifizierung der Drahtwindungen 2 dient.

Die Abtasteinrichtung 7 ist vorzugsweise als Infrarotsensor 23 ausgebildet, da mittels diesem die walzwarmen Drahtwindungen besonders einfach und genau erfaßbar sind. Die exakte Detektion der Kopfabschnitte ist dadurch gegeben, daß bei den gewalzten Drahtwindungen zwischen dem nicht abgekühlten Drahtwindungsabschnitt und dem abgekühlten Drahtwindungsabschnitt ein Temperatursprung und damit auch ein Sprung in der Helligkeit der Lichtstrahlung vorliegt, der von dem Infrarotsensor 23 exakt wahrgenommen werden kann.

Die Abtasteinrichtung 7 ist mit einer nicht näher dargestellten elektronischen Regeleinrichtung verbunden, mittels derer die für den Betrieb der Vorrichtung 52 wie auch der Vorrichtung 51 erforderlichen kinematischen Vorgänge geregelt werden.

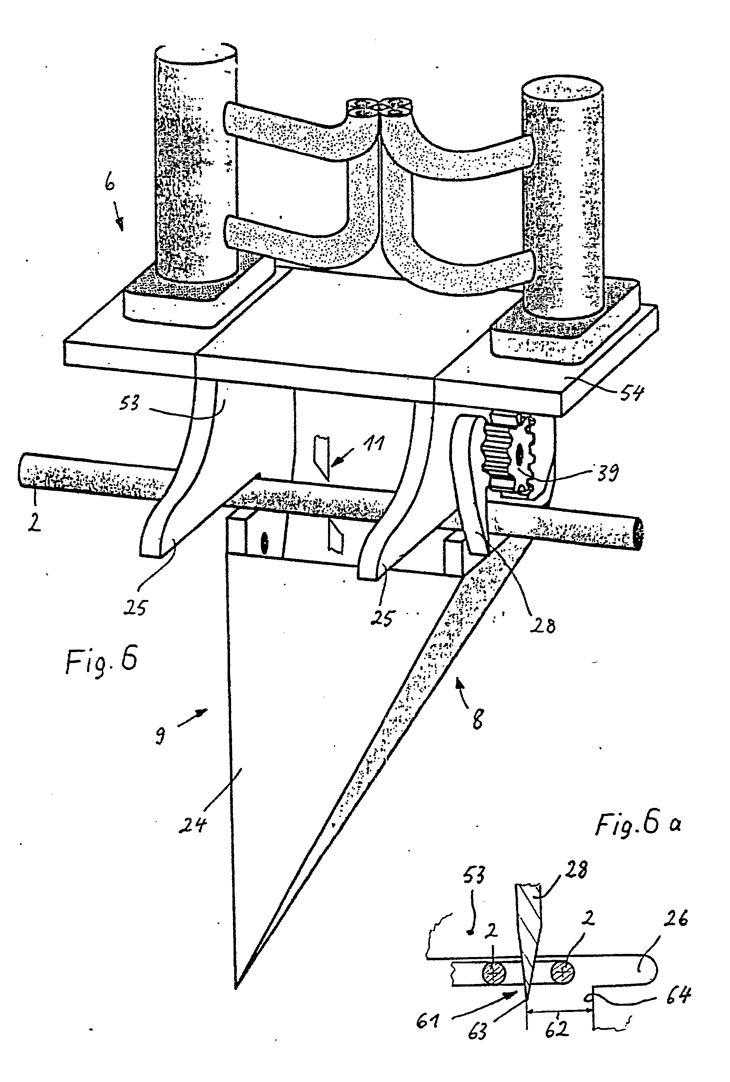

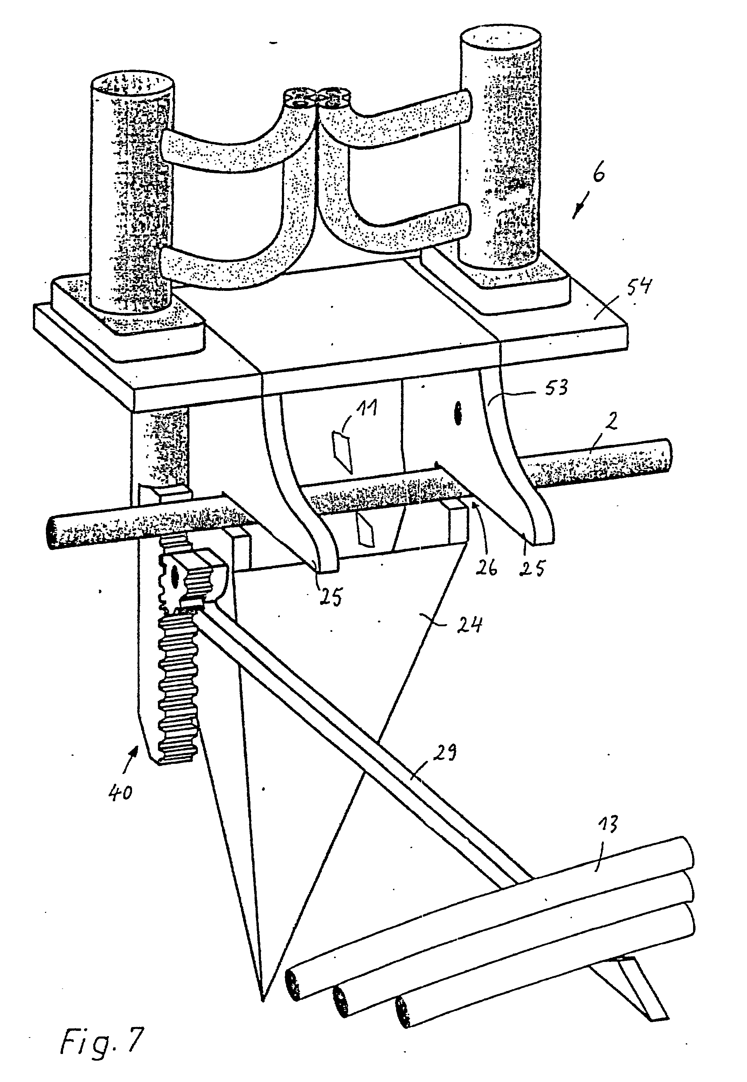

In den Fig. 6 bis 8 sind Einzelheiten des Werkzeugkopfes 6 schematisch dargestellt. Die Funktionsplatte 8 besteht aus einem Eindringglied 9, das als keilförmiger Eindringdorn 24 ausgebildet ist. Am oberen Endabschnitt des Eindringdorns 24 sind zwei Haltestege 53 ausgebildet, mittels derer die Funktionsplatte 54 des Werkzeugkopfes 6 verbunden ist. In den Haltestegen 53 ist jeweils ein Drahthalteschlitz 26 ausgebildet, der jeweils von einer Gegenfahrnase 25 überragt wird. Durch die Gegenfahrnasen 25 wird eine exakte, annähernd horizontale Lagefixierung der Drahtwindungen 2 erzielt, was deren Separation vereinfacht. Mittels eines von einem Zahnstangentrieb 39 betätigten Einzugshaken 28 kann jeweils eine Drahtwindung 2 fest in den Drahthalteschlitzen 26 gelagert werden. Der freie Endabschnitt 61 des Einzugshakens 28 ist vorzugsweise keilförmig ausgebildet (Fig. 6a). Der horizontale Abstand 62 der Spitze 63 des Endabschnitts 61 des Einzugshakens 28 ist von der unteren Einzugskante 64 des jeweiligen Drahthalteschlitzes 26 variabel einstellbar. Hierdurch ist es möglich, die Funktion des Werkzeugkopfes 6 an Drahtwindungen unterschiedlicher Werkstoffqualität und Ausführung anzupassen. Zwischen den Haltestegen 53 befindet sich der schematisch angedeutete Schneidkopf 11, mittels dem die in den Drahthalteschlitzen 26 gelagerte Drahtwindung 2 durchtrennt werden kann.

An der dem Einzugshaken 28 gegenüberliegenden Seite der Funktionsplatte 8 ist ein Schrotthaken 29 gelenkig gelagert, der mittels eines Zahnstangentriebes 40 betätigt werden kann. Dieser Schrotthaken 29 ist von einer senkrechten Stellung in eine horizontale Stellung schwenkbar und dient zur Halterung von Drahtabfällen 13 nach Durchtrennen einer Drahtwindung 2 mittels des Schneidkopfes 11.

Statt Zahnstangentrieben 39,40 ist es auch möglich, andere Antriebsmittel vorzusehen. Diese können als pneumatisch oder hydraulisch wirkende Stellzylinder oder aber auch elektromotorisch oder elektromagnetisch ausgebildet sein.

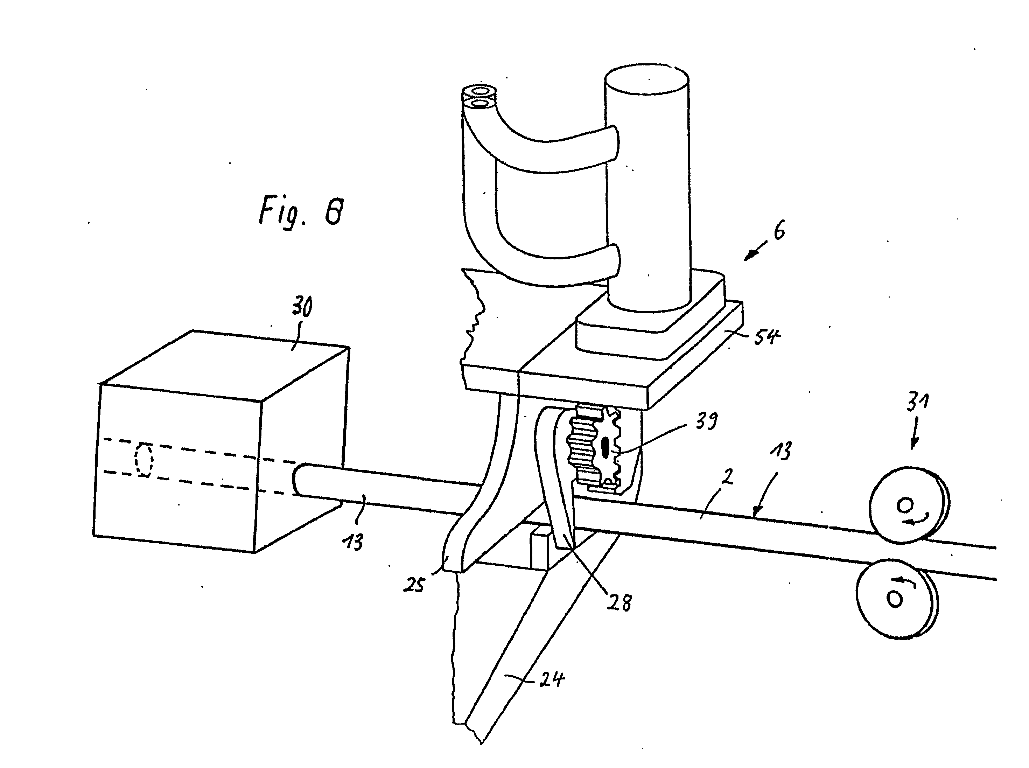

Von besonderem Vorteil ist es, wenn ein Abschnitt der Drahtwindung 2 des Drahtabfalls 13 einer Drahtprobenentnahmeeinrichtung 30 zugeführt werden kann, um von dort einer nicht näher dargestellten Drahtmeßvorrichtung zugeführt zu werden (Fig. 8). Hierzu kann seitlich des Einzugshakens 28 im Abstand von der Funktionsplatte 8 ein Rollenpaar 31 vorgesehen sein, das zur Streckung eines Drahtabschnitts der Drahtwindung 2 des Drahtabfalls 13 dient. Bei entsprechender Ausbildung des Rollenpaares 31 bzw. gegebenenfalls unter Einsatz eines oder mehrerer weiterer Rollenpaare ist sichergestellt, daß eine besondere Probenrichtmaschine nicht erforderlich ist. In der schematisch angedeuteten Drahtprobenentnahmeeinrichtung 30 wird dann eine Drahtprobe vorbestimmter Länge von der Drahtwindung 2 des Drahtabfalls 13 abgetrennt. Während dieses Vorganges bleibt der Drahtabfall 13 weiterhin auf dem Schrotthaken 29 gehalten.

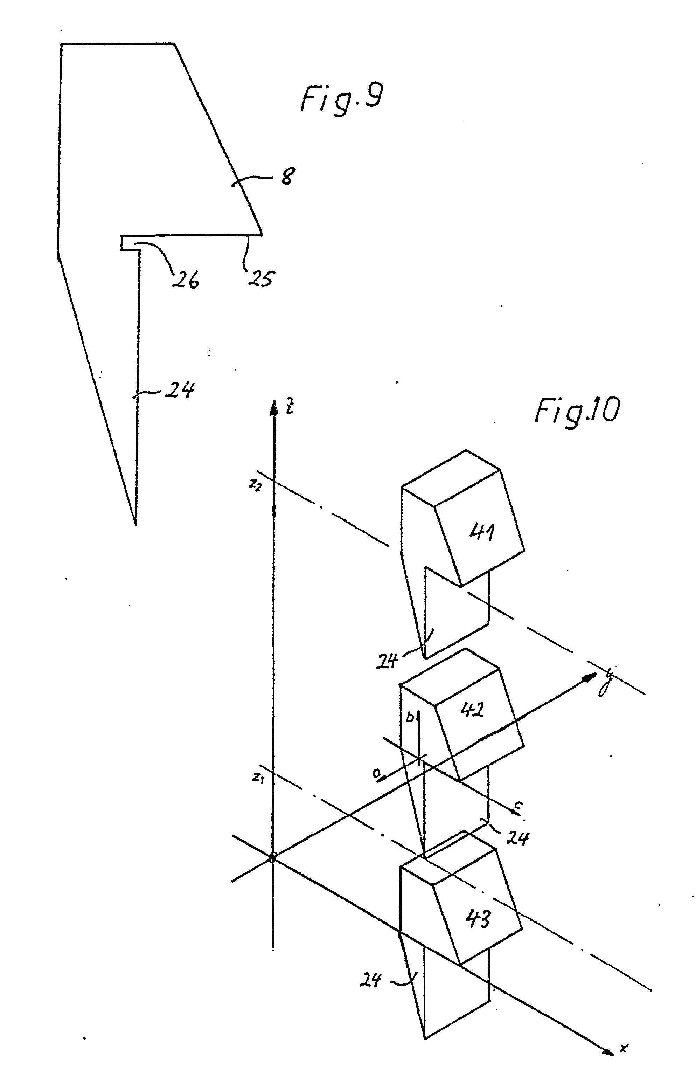

Der Eindringdorn 24 ist im Querschnitt dreieckförmig ausgebildet, so daß mit der Spitze 55 eine einfache Separierung von zwei Drahtwindungen 2 erfolgen kann. Bei Betrieb der Vorrichtungen 51,52 wird der Werkzeugkopf 6 jeweils so geführt, daß er nach Ablegen des Drahtabfalls 13 von der Hubendstellung 41 zunächst in eine abgesenkte Lauerstellung 42 gebracht wird. Hierdurch wird der vom Werkzeugkopf 6 zum Einbringen in die Drahtwindungen 2 zu verfahrende Weg geringer, wodurch eine größere Arbeitsgenauigkeit erzielt wird. Zum Separieren einer Drahtwindung 2 wird der Werkzeugkopf 6 in die Eindringstellung 43 gebracht, bei der sich der Eindringdorn 24 unterhalb der Ebene der Drahtwindungen 2 befindet. Die Gegenfahrnasen 25 sind dagegen der Ebene der Drahtwindungen 2 zugeordnet, so daß die separierte Drahtwindung 2 selbsttätig in die Drahthalteschlitze 26 geleitet wird (Fig. 9,10). Die Separierung der jeweiligen Drahtwindung 2 wird durch die keilförmige Ausbildung des freien Endabschnitts 61 des Einzugshakens 28 erleichtert. Durch die genaue Anlage der Drahtwindung in den Drahthalteschlitzen 26 sind exakte Kopfschnitte möglich.

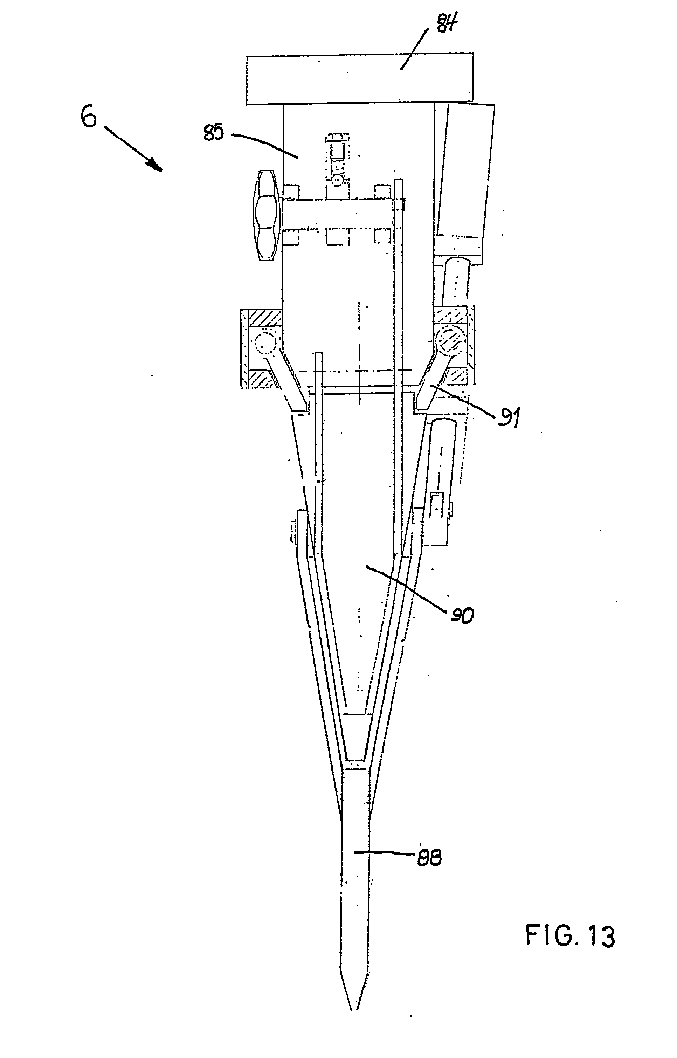

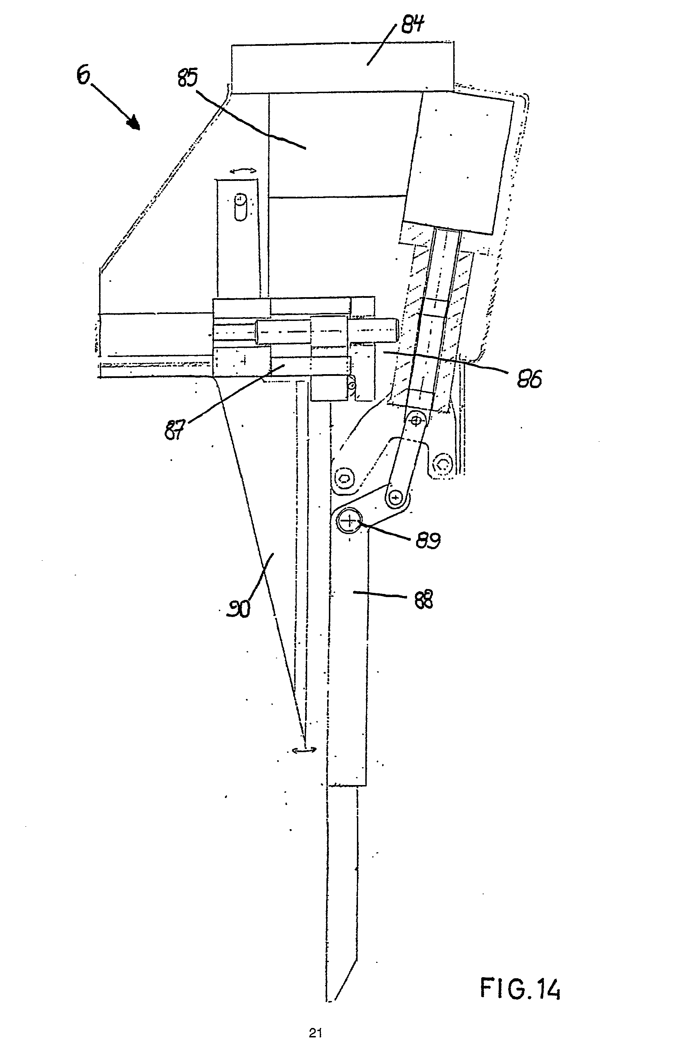

Fig. 13 und 14 zeigen eine Ausführungsform eines Werkzeugkopfes 6, der mit einem Flansch 84 an einem Kragarm befestigbar ist. Hierbei ist ein Teil 85 als angetriebene Drehverbindung ausgebildet, die auch die Energiezufuhr zur Betätigung der Trennvorrichtung und der anderen beweglichen Teile des Werkzeuges ermöglicht. Weiterhin ist ein Werkzeuggrundkörper 86 mit integrierter Trennvorrichtung 87 angeordnet. Der untere Teil 88 des Werkzeuges ist so ausgeführt, daß er sowohl als Eindring- und Separierorgan als auch als Schrottaufnahmeeinrichtung fungiert. Hierzu kann dieser Teil 88 um ein Gelenk 89 geschwenkt werden. Ferner wird ein Separierfinger 90, der mit dem unteren Teil 88 eine Gabel bildet, wobei die Öffnungsweite durch Einstellen des Separierfingers 90 variiert werden kann. So ist ein exaktes Schneiden genau einer Windung möglich. Ist der Werkzeugkopf 6 zur Berührung einer Windung soweit abgesenkt, wird die Windung durch die getrennt betätigbaren Einzugseinrichtungen 91 in die Trennvorrichtung 87 gezogen. Hierbei kann ein Signalgeber integriert werden.

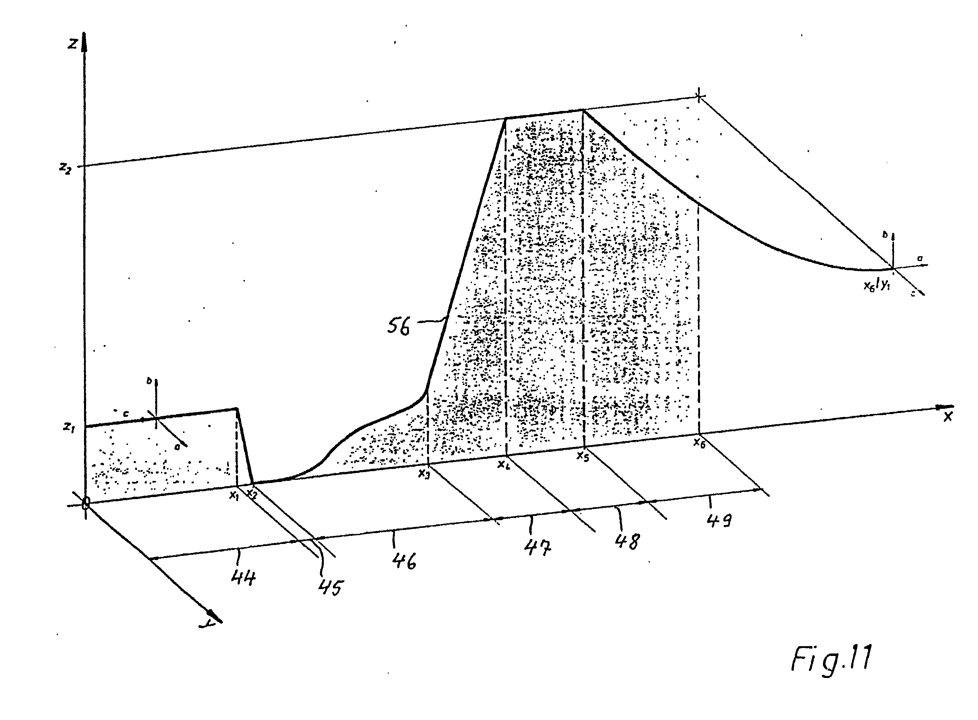

Gemäß Fig. 11 ist die Bahnkurve 56 des Werkzeugkopfes 6 schematisch dargestellt. Die Hauptachsen des Werkzeugkopfes 6 sind mit den Buchstaben a,b,c gekennzeichnet. Bei Betrieb der Vorrichtungen 51,52,80 verfährt der Werkzeugkopf 6 zunächst über eine Beschleunigungs- und Synchronisationsstrecke 44, an deren Ende er in die Drahtwindung 2 über die Eindringstrecke 45 eingeführt wird. Während des Bahnabschnitts 46 erfolgt die Betätigung des Einzugshakens 28, des Schneidkopfes 11 sowie des Schrotthakens 29. Während der Hubstrecke 47 verfährt der Werkzeugkopf 6 von der Eindringstellung 43 in die Hubendstellung 41. Nach einem Verfahren über die Transportstrecke 48 wird der Werkzeugkopf 6 im Bereich der Ausschwenkbahn 49 ausgeschwenkt und legt den Drahtabfall 13 in einen Schrottbehälter 81 neben der Förderbahn 1, beispielsweise wie in Fig. 3 dargestellt, ab. Danach wird der Werkzeugkopf 6 wieder in die Beschleunigungs- und Synchronisationsstrecke 44 eingefahren. Ein Absenken auf z 1 ist nicht zwingend nötig, verkürzt jedoch die Absenkzeit nach dem Einsynchronisieren. Das Ausschwenken ist ebenfalls nicht zwingend nötig, falls die Schrottübernahmeposition oberhalb oder hinter der Förderbahn 1 angeordnet ist.

Von besonderem Vorteil ist es, daß für Kopf- und Fußschnitte jeweils nur eine Vorrichtung 51, 52, 80 benötigt wird. Der jeweils verwendete Infrarotsensor 23 ist als passiver Sensor relativ störungsanfällig und ermöglicht eine Identifikation der jeweiligen Drahtwindungen 2 mit ausreichender Genauigkeit. Aufgrund der besonderen Ausbildung der Ausleger 4 wird die obere Bauhöhe beim Betrieb der Vorrichtungen 51,52,80 nicht überschritten, so daß diese auch in Fertigungshallen mit relativ niedrigen Dächern bzw. niedrig angeordneten Hilfseinrichtungen, wie Kranbahnen und dergleichen, eingesetzt werden können. Weiterhin ist es möglich, mit einem Werkzeugkopf 6 sowohl die Separierung der Drahtwindungen als auch die Beseitigung von Drahtabfall 13 durchzuführen. Mittels der Vorrichtungen 51, 52, 80 ist eine gezielte Schrottablagerung möglich, wobei die Ablage der Drahtabfälle 13 nicht an bestimmt vorgegebene Aufnahmebehälter gebunden ist. Die an dem Werkzeugkopf 6 räumlich eng integrierten Funktionselemente ermöglichen eine kompakte Bauweise, die die Handhabbarkeit der Vorrichtungen 51, 52, 80 erleichtert. Durch die Möglichkeit, automatisch Proben von Drahtwindungen zu entnehmen und diese automatisch zu richten und einer Prüfung zuzuführen, erleichtert die Qualitätsüberwachung.

Durch die Verwendung von Parkbahnen 65, die sowohl für Vorrichtung 51 als auch für Vorrichtungen 52,80 vorgesehen werden können, ist es möglich, bei Betriebsstörungen an einer Vorrichtung einen schnellen Wechsel vorzunehmen, so daß der Fertigungsbetrieb nicht beeinträchtigt wird. Die funktionsgestörten Vorrichtungen 51,52 können mittels der Parkbahn 65 in einer Umgebung überstellt und gewartet werden, die für das Wartungspersonal weniger beeinträchtigend oder gefährlich ist. Die Vorrichtungen 52,80 oder 51 mit herausnehmbaren Schienen können mit Kränen ausgewechselt werden.

Fig. 12 zeigt eine Anwendung, bei der auf zwei Strängen Draht verwalzt wird. Wegen der extrem kurzen Verfahrwege und Stoßzeiten werden pro Strang für Kopf- und Fußschnitt je eine Anordnung eingesetzt. Eine Reserveanordnung steht bereit und kann jedes der vier im Betrieb befindlichen Anordnungen ersetzen. Die abgeschnittenen Windungen werden mittig ausgeschwenkt und nach Abnahme der Probe in die Schächte einer Schrederanlage geführt.

## Patentansprüche

1. Verfahren zum Unterteilen von einer Lage hintereinander und sich überlappend auf einem Fördermittel (1) aufliegenden Drahtwindungen (2), die von einem Windungsleger aus walzwarmen Draht geformt und auf das Fördermittel (1) abgelegt worden sind, auf dem die Drahtwindungen (2) zu einer Sammelvorrichtung gefördert werden, wobei oberhalb des Fördermittels (1) eine verfahrbare Anordnung (51) mit einem Aufnehmer (26) für eine oder mehrere Drahtwindungen (2) und eine Schneideeinrichtung (11) angeordnet ist, die mit einem Sensor (7) eine Drahtwindung (2) ermittelt und eine vorbestimmte Windung separiert sowie eine Trennung vornimmt, dadurch gekennzeichnet, daß die verfahrbare Anordnung (51) nach Detektion der vorbestimmten Drahtwindung (2) über einen Sensor (7) mit der Geschwindigkeit der detektierten Drahtwindung (2) zur Aufnahme der Drahtwindungen (2) synchronisiert wird und ein höhenveränderlicher Werkzeugkopf (6) an der verfahrbaren Anordnung (51) zwischen die Drahtwindungen (2) bis unterhalb der Förderebene abgesenkt wird, wobei die detektierte Drahtwindung (2) in eine Aufnahme (26) mit zugeordneter Schneidvorrichtung (11) des Werkzeugkopfes (6) im Bereich der Förderebene geführt wird und nach dem Schnitt der abgetrennte Teil als Abfall über einen Halter (29) am Werkzeugkopf (6) aufgenommen und im Bereich außerhalb der Förderbahn (1) abgeworfen wird, bevor seine Ausgangsposition oberhalb des Fördermittels (1) wiedereinstellbar ist.

2. Verfahren nach Anspruch 1, dadurch gekennzeichnet, daß der dem Trennschnitt zugewandte Endabschnitt des Drahtabfalls (29) als Drahtprobe abgetrennt und einer Qualitätssicherung zugeführt wird.

3. Verfahren nach Anspruch 1 oder 2, dadurch gekennzeichnet, daß der Werkzeugkopf (6) in einer abgesenkten Lauerstellung oberhalb des Fördermittels (1) zum Absenken zwischen die Drahtwindungen (2) angeordnet wird.

4. Vorrichtung zum Unterteilen von einer Lage hintereinander und sich überlappend auf einem Fördermittel (1) aufliegenden Drahtwindungen (2), die von einem Windungsleger aus walzwarmen Draht geformt und auf das Fördermittel (1) abgelegt worden sind, auf dem die Drahtwindungen (2) zu einer Sammelvorrichtung gefördert werden, wobei oberhalb des Fördermittels (1) mindestens eine verfahrbare Anordnung (51) mit einem Aufnehmer (26) für eine oder mehrere Drahtwindungen (2) und eine Schneideeinrichtung (11) angeordnet ist, die mit einem Sensor (7) eine Drahtwindung (2) ermittelt und eine vorbestimmte Windung separiert sowie eine Trennung vornimmt, dadurch gekennzeichnet, daß die verfahrbare Anordnung (51) über Führungsbahnen (11) oberhalb des Fördermittels (1) zur Aufnahme der Drahtwindungen (2) synchronisiert mit den Drahtwindungen verfahrbar angeordnet ist, und daß die verfahrbare Anordnung einen Ausleger (4) mit einem höhenveränderlichen und einstellbaren Werkzeugkopf (6) aufweist, der den Aufnehmer, die Schneideeinrichtung eine lichtoptische und/oder thermische Abtastvorrichtung (7) als Sensor und einen Halter (29) für abgetrennte Drahtwindungen aufweist.

5. Vorrichtung zum Unterteilen von einer Lage hintereinander und sich überlappend auf einem Fördermittel (1) aufliegenden Drahtwindungen (2), die von einem Windungsleger aus walzwarmen Draht geformt und auf das Fördermittel (1) abgelegt worden sind, auf dem die Drahtwindungen (2) zu einer Sammelvorrichtung gefördert werden, wobei oberhalb des Fördermittels (1) mindestens eine verfahrbare Anordnung (51) mit einem Aufnehmer (26) für eine oder mehrere Drahtwindungen (2) und eine Schneideeinrichtung (11) angeordnet ist, die mit einem Sensor (7) eine Drahtwindung (2) ermittelt und eine vorbestimmte Windung separiert sowie eine Trennung vornimmt, dadurch gekennzeichnet, daß mindestens ein Fahrwagen (66) auf parallel zum Fördermittel (1) angeordneten Schienen (70, 71) als verfahrbare austauschbare Anordunung synchronisiert mit den Drahtwindungen verfahrbar angeordnet ist, und daß der Fahrwagen einen Ausleger (4) mit einem höhenveränderlichen und einstellbaren Werkzeugkopf (6) aufweist, der den Aufnehmer, die Schneideeinrichtung eine lichtoptische und/oder thermische Abtastvorrichtung (7) als Sensor und einen Halter (29) für abgetrennte Drahtwindungen aufweist.

6. Vorrichtung nach Anspruch 4 oder 5, dadurch gekennzeichnet, daß der Werkzeugkopf (6) eine Funktionsplatte (8) mit einem den Drahtwindungen (2) zugewandten Eindringlied (9), einer Drahtaufnahme (10), einen betätigbaren Schneidkopf (11) sowie einen Halter (12) für den Drahtabfall (13) versehen ist.

7. Vorrichtung nach einem der Ansprüche 4 bis 6, dadurch gekennzeichnet, daß der Ausleger (4) als einseitiger Kragarm (16) an verfahrbaren Einheiten (15) ausgebildet ist.

8. Vorrichtung nach einem der Ansprüche 4 bis 7, dadurch gekennzeichnet, daß der Werkzeugkopf (6) um eine vertikale Achse (5) verdrehbar angeordnet ist.

9. Vorrichtung nach einem der Ansprüche 4 bis 8, dadurch gekennzeichnet, daß die Drahtbahn (27) der zu trennenden Drahtwindung (2) nach Lagefixierung durch die zugeordnete Gegenfahrnase (25) mittels eines Einzugshakens (28) in der Drahthalteaufnahme (26) festklemmbar ist.

10. Vorrichtung nach einem der Ansprüche 4 bis 9, dadurch gekennzeichnet, daß als Sensor (23) ein Infrarot-Pyrometer einsetzbar ist.

11. Vorrichtung nach Anspruch 10, dadurch gekennzeichnet, daß der Infrarot-Pyrometer-Sensor den Temperatursprung zwischen ungekühlten und gekühlten Windungen der Steuereinrichtung zuführt.

12. Vorrichtung nach einem der Ansprüche 4 bis 11, dadurch gekennzeichnet, daß zwei gegeneinander höhenversetzte Eindringglieder (88,90) etwa parallel im Abstand und größer als der Drahtdurchmesser angeordnet sind sowie der Abstand einstellbar ist.

13. Vorrichtung nach Anspruch 12, dadurch gekennzeichnet, daß ein Eindringglied (88) als Halter für den abgetrennten Drahtteil (13) verschwenkbar ist.

14. Vorrichtung nach einem der Ansprüche 4 bis 13, dadurch gekennzeichnet, daß jeweils eine verfahrbare Einheit (51) baugleich verfahrbar für Kopf-und Fußschnitt der Drahtwindungen (2) angeordnet ist.

**Revendications**

1. Procédé pour subdiviser des spires en fils (2) se trouvant l'une à l'arrière de l'autre, en chevauchement, sur un dispositif transporteur (1), spires ayant été formées par un appareil de formation de spires à partir de fil laminé à chaud et ayant été déposées sur le dispositif transporteur (1), sur lequel ces spires en fils (2) sont transportées vers un dispositif destiné à les receuillir, un appareil mobile (51) présentant un creux de réception (26) pour une ou pour plusieurs spires en fils (2) et un dispositif de coupe (11) se trouvant au-dessus du dispositif transporteur (1), le dispositif de coupe relevant à l'aide d'un détecteur (7) une spire en fils (2), séparant une spire préalablement déterminée et effectuant une coupe, le procédé étant caractérisé en ce que l'appareil mobile (51), après détection de la spire en fils préalablement déterminée (2) par un détecteur (7) est synchronisé à la vitesse de la spire en fils détectée (2) pour la réception des spires en fils (2) et en ce qu'une tête d'outil (6), dont la position en hauteur peut être modifiée, tête d'outil (6) montée sur l'appareil mobile (51), est abaissée entre les spires en fils (2) jusqu'en dessous du niveau du plan de transport, la spire en fils (2) détectée étant amenée dans un creux de réception (26), le dispositif de coupe coopérant (11) dont est munie la tête d'outil (6) se trouvant dans la zone du plan de transport, et en ce qu'après la coupe, la partie détachée est receuillie, comme déchet, par un support (29) monté sur la tête d'outil (6) et est rejetée dans la zone située à l'extérieur de la voie du dispositif transporteur (1) avant que la position de départ au-dessus du dispositif transporteur (1) puisse être à nouveau réglée.

2. Procédé suivant la revendication 1, caractérisé en ce que la partie d'extrémité du déchet de fil (29) qui est dirigée vers l'endroit de coupe de séparation est détachée en tant qu'échantillon de fil et est envoyée à un appareil permettant de s'assurer de la qualité de cet échantillon de fil.

3. Procédé suivant l'une ou l'autre des revendications 1 et 2, caractérisé en ce que la tête d'outil (6) est prévue dans une position de montage abaissée, au-dessus du dispositif transporteur (1), pour son abaissement entre les spires en fils (2).

4. Dispositif pour subdiviser des spires en fils (2) se trouvant l'une à l'arrière de l'autre, en chevauchement, sur un dispositif transporteur (1), spires ayant été formées par un appareil de formation de spires à partir de fil laminé à chaud et ayant été déposées sur le dispositif transporteur (1), sur lequel ces spires en fils (2) sont transportées vers un dispositif destiné à les recueillir, au moins un appareil mobile (51) présentant un creux de réception (26) pour une ou pour plusieurs spires en fils (2) et un dispositif de coupe (11) se trouvant au-dessus du dispositif transporteur (1), le dispositif de coupe relevant à l'aide d'un détecteur (7) une spire en fils (2), séparant une spire préalablement déterminée et effectuant une coupe, le dispositif étant caractérisé en ce que l'appareil mobile (51) est prévu sur des voies de guidage au-dessus du dispositif transporteur (1) destiné à recevoir les spires en fils (2), de telle façon qu'il puisse être déplacé en synchronisme avec les spires en fils, et en ce que l'appareil mobile comporte une flèche (4) qui porte une tête d'outil (6) dont la position en hauteur peut être modifiée et qui peut être réglée, tête d'outil (6) qui présente le creux de réception et qui est munie du dispositif de coupe, d'un appareil d'exploration photo-optique et/ou thermique (7), destiné à servir de détecteur, et d'un support (29) prévu pour recevoir les spires en fils détachées.

5. Dispositif pour subdiviser des spires en fils (2) se trouvant l'une à l'arrière de l'autre, en chevauchement, sur un dispositif transporteur (1), spires ayant été formées par un appareil de formation de spires à partir de fil laminé à chaud et ayant été déposées sur le dispositif transporteur (1), sur lequel ces spires en fils (2) sont transportées vers un dispositif destiné à les recueillir, au moins un appareil mobile (51) présentant un creux de réception (26) pour une ou pour plusieurs spires en fils (2) et un dispositif de coupe (11) se trouvant au-dessus du dispositif transporteur (1), le dispositif de coupe relevant à l'aide d'un détecteur (7) une spire en fils (2), séparant une spire préalablement déterminée et effectuant une coupe, le dispositif étant caractérisé en ce qu'au moins un chariot de roulement (66) est prévu sur des rails (70, 71) agencés en parallèle avec le dispositif transporteur (1), en tant qu'appareil mobile remplaçable, de telle façon qu'il puisse être déplacé en synchronisme avec les spires en fils, et en ce que le chariot de roulement comporte une flèche (4) qui porte une tête d'outil (6) dont la position en hauteur peut être modifiée et qui peut être réglée, tête d'outil (6) qui présente le creux de réception et qui est munie du dispositif de coupe, d'un appareil d'exploration photo-optique et/ou thermique (7), destiné à servir de détecteur, et d'un support (29) prévu pour recevoir les spires en fils détachées.

6. Dispositif suivant l'une ou l'autre des revendications 4 et 5, caractérisé en ce que la tête d'outil (6) comporte une plaque fonctionnelle ou plaque de commande (8) qui est munie d'un organe d'introduction (9) dirigé vers les spires en fils (2) et qui présente un creux de réception (10) pour les fils, ainsi qu'une tête de coupe (11) pouvant être actionnée et un support (12) prévu pour recevoir le déchet de fil (13).

7. Dispositif suivant l'une quelconque des revendications 4 à 6, caractérisé en ce que la flèche (4) est prévue sous la forme d'un bras en porte-a-faux unilatéral (16) sur des unités mobiles (15).

8. Dispositif suivant l'une quelconque des revendications 4 à 7, caractérisé en ce que la tête d'outil (6) est prévue de telle sorte qu'elle puisse tourner sur un axe vertical (5).

9. Dispositif suivant l'une quelconque des revendications 4 à 8, caractérisé en ce que la bande de fils (27) de la spire en fils (2) à couper peut, après détermination de sa position, être bloquée par un nez antagoniste de butée correspondant (25) à l'intervention d'un crochet d'introduction (28) prévu dans le creux de réception et de retenue de fils (26).

10. Dispositif suivant l'une quelconque des revendications 4 à 9, caractérisé en ce qu'il est muni d'un pyromètre à rayons infrarouges destiné à jouer le rôle de détecteur (23).

11. Dispositif suivant la revendication 10, caractérisé en ce que le détecteur que constitue le pyromètre à rayons infrarouges communique à l'appareil de commande la différence de température entre les spires non refroidies et les spires refroidies.

12. Dispositif suivant l'une quelconque des revendications 4 à 11, caractérisé en ce qu'il est prévu deux organes d'introduction (88, 90) décalés en hauteur l'un par rapport à l'autre qui sont parallèles l'un à l'autre et se trouvent à distance l'un de l'autre, la distance qui les sépare étant supérieure au diamètre du fil, et en ce que la distance peut être réglée.

13. Dispositif suivant la revendication 12, caractérisé en ce qu'un organe d'introduction (organe d'introduction 88), servant de support pour la partie de fil détachée (13), est prévu de telle sorte qu'il puisse pivoter.

14. Dispositif suivant l'une quelconque des revendications 4 à 13, caractérisé en ce qu'il est prévu des unités mobiles distinctes (51), de construction identique, pouvant être déplacées l'une pour la coupe de tête et l'autre pour la coupe de base des spires en fils (2).

**Claims**

1. Method of dividing a layer of wire windings (2) which lie one behind another, which mutually overlap on a conveyor means (1), and have been formed from rolling-hot wire and have been deposited on the conveyor means (1) by a winding laying device, on which the wire windings (2) are conveyed to a collecting device, wherein above the conveyor means (1) a slidable device (51) with a lifter (26) for one or more wire windings (2) and a cutting device (11) is mounted, which detects a wire winding (2) with a sensor (7), singles out a specified winding and separates it, characterised in that the slidable device (51), after detection of the specified wire winding (2) via a sensor (7), is synchronised with the speed of the wire winding (2) detected in order to receive the wire windings (2), and a height-adjustable tool head (6) is lowered on the slidable apparatus (51), between the wire windings (2), until it is below the conveying plane, and the detected wire winding (2) is guided into a lifter (26) with an associated cutting device (11) of the tool head (6) in the region of the conveying plane and, after cutting of the separated part, is received as scrap via a holding device (29) on the tool head (6) and is thrown away in the region outside the conveyor belt (1), before its starting position above the conveyor means (1) can be re-set.

2. Method according to claim 1, characterised in that the end section of the scrap wire (29) facing the separating cut is separated as a wire sample and is fed to quality monitoring apparatus.

3. Method according to claim 1 or 2, characterised in that the tool head (6) is disposed in a lowered waiting position above the conveyor means (1) in order to be lowered between the wire windings (2).

4. Apparatus for dividing a layer of wire windings (2), which lie one behind one another, which mutually overlap on a conveyor means (1), and which have been formed from rolling-hot wire and have been deposited on the conveyor means (1) by a winding laying device, on which the wire windings (2) are conveyed to a collecting device, wherein above the conveyor means (1) at least one slidable device (51) with a lifter (26) for one or more wire windings (2) and a cutting device (11) is mounted, which detects a wire winding (2) with a sensor (7), singles out a specified winding and separates it, characterised in that the slidable device (51) is mounted on guide rails (11) above the conveyor means (1) for receiving the wire windings (2) so as to be movable in synchronisation with the wire windings, and in that the slidable apparatus has a cantilever (4) with a height-adjustable tool head (6) which can be set, and which comprises the lifter, the cutting device, an optic and/or thermal scanning device (7) as a sensor, and a holding device (29) for separated wire windings.

5. Apparatus for dividing a layer of wire windings, which lie one behind another, which mutually overlap on a conveyor means (1), and which have been formed from rolling-hot wire and have been deposited on the conveyor means (1) by a winding laying device, on which the wire windings (2) are conveyed to a collecting device, wherein above the conveyor means (1) at least one slidable device (51) with a lifter (26) for one or more wire windings (2) and a cutting device (11) is mounted, which detects a wire winding (2) with a sensor (7), singles out a specified winding and separates it, characterised in that at least one carriage (66) is mounted on rails (70, 71) arranged parallel to the conveyor means (1) as a slidable, exchangeable device, in such a manner as to be slidable in synchronisation with the wire windings, and in that the carrier comprises a cantilever (4) with a height-adjustable tool head (6), which can be set, and which comprises the lifter, the cutting device, an optic and/or thermal scanning device (7) as a sensor, and a holding device (29) for separated wire windings.

6. Apparatus according to claim 4 or 5, characterised in that the tool head (6) comprises a function plate (8) which is provided with a penetrating member (9) facing the wire windings (2), a wire receiver (10), an actuatable cutting head (11) and a holding device (12) for the scrap wire (13).

7. Apparatus according to one of claims 4 to 6, characterised in that the cantilever (4) is formed on slidable units (15) as a unilateral gibbet (16).

8. Apparatus according to one of claims 4 to 7, characterised in that the tool head (6) is mounted rotatably about a vertical axis (5).

9. Apparatus according to one of claims 4 to 8, characterised in that the wire path (27) of the wire winding (2) to be separated may be clamped in the wire holding seat (26) by means of a draw-in hook (28) after being fixed in position by the associated buffer projection (25).

10. Apparatus according to one of claims 4 to 9, characterised in that an infrared pyrometer may be used as a sensor (23).

11. Apparatus according to claim 10, characterised in that the infrared pyrometer sensor feeds the temperature difference between uncooled and cooled windings to the control device.

12. Apparatus according to one of claims 4 to 11, characterised in that two penetration members (88, 90) set at different heights relative to one another are mounted approximately parallel at a distance and larger than the wire diameter, and the distance is adjustable.

13. Apparatus according to claim 12, characterised in that a penetrating member (88) is pivotable as a holding device for the separated piece of wire (13).

14. Apparatus according to one of claims 4 to 13, characterised in that a slidable unit (51) is provided for the top and bottom cut of the wire windings (2) respectively and is slidable like the construction.

Fig.1

EP 0 255 724 B1

Fig.2a

Fig.2b

Fig.2c

Fig.2d

Fig.2e

Fig.2f

EP 0 255 724 B1

*Fig.3*

Fig. 4

*Fig.5*

Fig. 6

Fig. 6 a

*Fig. 7*

Fig. 6

Fig.9

Fig.10

Fig.11

EP 0 255 724 B1

FIG. 12

FIG. 13

FIG.14